# EUROPÄISCHE PATENTSCHRIFT

(11) **EP 4 045 938 B1**
(45) Veröffentlichungstag und Bekanntmachung des Hinweises auf die Patenterteilung: **01.07.2026**
(21) Anmeldenummer: 20771533.5
(22) Anmeldetag: 10.09.2020
(51) Int. Cl.: G01S 7/484, G01S 7/486, G01S 17/14, G01S 7/4861

(54) **ERWEITERUNG EINES DYNAMIKBEREICHS VON SPAD-BASIERTEN DETEKTOREN**
EXPANSION OF A DYNAMIC RANGE OF SPAD-BASED DETECTORS
EXTENSION D'UNE PLAGE DYNAMIQUE DE DÉTECTEURS SPAD

(30) Priorität: 15.10.2019 DE 102019215835
(43) Veröffentlichungstag der Anmeldung: 24.08.2022
(73) Patentinhaber: Robert Bosch GmbH, 70442 Stuttgart (DE)
(72) Erfinder: HAS, Remigius, 71120 Grafenau-Daetzingen (DE); BACHMEIR, Mathias, 71638 Ludwigsburg (DE); HASENOHR, Thomas, 70771 Leinfelden-Echterdingen (DE); STRICKER-SHAVER, Daniel, 74354 Besigheim (DE)
(86) Internationale Anmeldenummer: PCT/EP2020/075326
(87) Internationale Veröffentlichungsnummer: WO 2021/073807

(56) Entgegenhaltungen:
- US-A1- 2019 250 257
- US-A1- 2019 302 242
- US-B1- 10 348 051

## Beschreibung

Die Erfindung betrifft ein Verfahren zum Betreiben einer LIDAR-Vorrichtung durch ein Steuergerät sowie eine LIDAR-Vorrichtung zum Abtasten eines Abtastbereichs.

### Stand der Technik

Automatisiert betreibbare Fahrzeuge und Fahrfunktionen erlangen zunehmend an Bedeutung im öffentlichen Straßenverkehr. Zum technischen Umsetzen derartiger Fahrzeuge und Fahrfunktionen sind oftmals LIDAR-Sensoren notwendig. LIDAR-Sensoren erzeugen hierbei elektromagnetische Strahlen, beispielsweise Laserstrahlen und nutzen diese Strahlen zum Abtasten eines Abtastbereichs. Basierend auf einer Time-of-Flight Analyse können Distanzen zwischen dem LIDAR-Sensor und Objekten im Abtastbereich ermittelt werden.

Detektoren von LIDAR-Sensoren mit einer hohen Reichweite können besonders unempfindlich gegenüber Temperatur- und Alterungseinflüssen ausgestaltet sein, wenn diese aus SPAD (Single-Photon-Avalanche-Diode)-Zellen bestehen. Jeder Makropixel des Detektors wird aus mehreren SPA-Dioden bzw. SPAD-Zellen aufgebaut und kann einfallende Strahlen aus einem definierten Raumwinkelbereich empfangen.

Bedingt durch die Funktionsweise von SPAD-Zellen muss eine Totzeit bei der Konstruktion des Detektors berücksichtigt werden. Die Totzeit resultiert aus der notwendigen Zeitspanne zum Unterdrücken des Lawinenstroms innerhalb der SPAD-Zelle und einem erneuten Anheben der an der SPAD-Zelle anliegenden Spannung für eine weitere Detektion von Photonen. Während der Totzeit der SPAD-Zellen ist eine weitere Detektion von Photonen nicht möglich, zudem kann nicht festgestellt werden, ob nur ein Photon oder mehrere Photonen während einer Aktivzeit der SPAD-Zellen detektiert werden.

Üblicherweise wird eine Auswerteelektronik zum Unterdrücken des Lawinenstroms innerhalb der SPAD-Zelle wechselstrom basiert betrieben, wodurch die Totzeit erhöht und die Anzahl der maximal detektierten Photonen pro Zeit verringert wird. Des Weiteren weisen die bisher bekannten SPADbasierten Detektoren einen unzureichenden Dynamikbereich auf.

In der US 10 348 051 B1 wird ein scannender LIDAR-Sensor beschrieben, bei dem die Strahlenquelle als ein "Seed Laser" ausgestaltet ist. Die durch den Seed Laser erzeugten Strahlen werden anschließend mittels eines optischen Verstärkers 500 in der Intensität verstärkt und geformt. Die US 2019/302242 A1 beschreibt Auswerteschaltungen und Lawinenlöschschaltungen zum Ansteuern einer SPAD-Zelle.

Die Offenlegungsschrift US 2019/0250257 A1 offenbart eine LIDAR-Vorrichtung.

### Offenbarung der Erfindung

Die der Erfindung zugrunde liegende Aufgabe kann darin gesehen werden, ein Verfahren zum Betreiben einer LIDAR-Vorrichtung sowie eine LIDAR-Vorrichtung mit einem vergrößerten Dynamikbereich vorzuschlagen.

Diese Aufgabe wird mittels des jeweiligen Gegenstands der unabhängigen Ansprüche gelöst. Vorteilhafte Ausgestaltungen der Erfindung sind Gegenstand von jeweils abhängigen Unteransprüchen.

Nach einem Aspekt der Erfindung wird ein Verfahren zum Betreiben einer LIDAR-Vorrichtung durch ein Steuergerät bereitgestellt. In einem Schritt wird mindestens ein Strahlenpuls durch eine Strahlenquelle in einen Abtastbereich emittiert.

Die LIDAR-Vorrichtung kann somit als gepulste LIDAR-Vorrichtung betrieben werden. Je nach Ausgestaltung der LIDAR-Vorrichtung kann ein Abstrahlwinkel von dem mindestens einen Strahlenpuls in vertikaler Richtung und/oder horizontaler Richtung variiert und somit ein Raumwinkel abgetastet werden.

Aus dem Abtastbereich reflektierte und/oder rückgestreute Strahlen werden durch einen mehrere SPAD-Zellen aufweisenden Detektor empfangen und in elektrische Zählpulse gewandelt. Der Detektor kann somit aus einem SPAD-Zellen-Array aufgebaut sein und eine flächige Ausdehnung aufweisen.

Erfindungsgemäß wird der mindestens eine Strahlenpuls mit einer verlängerten fallenden Intensitätsflanke erzeugt und der Detektor durch eine DC-gekoppelte Auswerteelektronik ausgelesen, wobei eine Länge eines durch den Detektor empfangenen Spannungssignals oder eine Aktivzeit des Detektors eine Information über eine Intensität der aus dem Abtastbereich reflektierten und/oder rückgestreuten Strahlen liefert. Die fallende Impulsflanke des Strahlenpulses erstreckt sich über eine längere Zeitspanne als eine steigende Impulsflanke des Strahlenpulses.

Nach einem weiteren Aspekt der Erfindung wird ein Steuergerät bereitgestellt, welches dazu dient, das erfindungsgemäße Verfahren auszuführen. Das Steuergerät kann in der LIDAR-Vorrichtung integriert oder als ein externes Steuergerät ausgestaltet sein.

Die Auswerteelektronik kann vorzugsweise als eine Lawinenlöschschaltung bzw. eine sogenannte Quenching-Schaltung ausgestaltet sein. Durch den Einsatz einer DC-gekoppelten Auswerteelektronik, anstelle einer AC-gekoppelten Auswerteelektronik, kann die Aktivzeit der SPAD-Zellen präzise gesteuert und an eine Dauer des erzeugten bzw. empfangenen Strahlenpulses angepasst werden, um eine hochpräzise Detektion einer Ankunftszeit des Strahlenpulses zu messen. Insbesondere kann die Aktivzeit, während der die SPAD-Zellen lichtsensitiv sind, verlängert werden.

Aufgrund einer Kombination aus einer gezielten Steuerung der Aktivzeit der SPAD-Zellen mit einem verlängerten Strahlenpuls kann eine höhere durchschnittliche Belichtungszeit der SPAD-Zellen erzielt werden, welche in einem höheren Dynamikbereich des Detektors resultiert. Der Dynamikbereich kann durch das erfindungsgemäße Verfahren auf weit über 1 Million detektierbare Photonen während eines empfangenen Strahlenpulses erweitert werden.

Insbesondere kann der Dynamikbereich der LIDAR-Vorrichtung durch eine Anpassung der Ansteuerung der Strahlenquelle und eine Änderung der Auswerteelektronik des Detektors technisch einfach erhöht werden.

Des Weiteren können durch eine verlängerte abfallende Flanke bzw. Intensitätsflanke des Strahlenpulses mittels der Ansteuerung der Strahlenquelle durch das Steuergerät mehrere in ihrer Intensität zunehmend schwächere Strahlenpulse nachgebildet werden, wodurch das Belichten des Abtastbereichs mit mehreren kurzen Strahlenpulsen und somit der Einsatz einer besonders hochfrequenten Strahlenquelle entfallen kann.

Der Einsatz von SPAD-Zellen bei der Detektion der reflektierten Strahlenpulse ist aufgrund der kleinen Abmessungen, der niedrigeren Vorspannung und Verlustleistung und der Kompaktheit, Robustheit und Zuverlässigkeit besonders vorteilhaft. Zudem liefern SPAD-Zellen eine höhere Quanteneffizienz und eine höhere Präzision bei der Detektion der Ankunftszeit von Photonen.

Gemäß einem Ausführungsbeispiel wird die Strahlenquelle derart durch das Steuergerät betrieben, dass der mindestens eine Strahlenpuls mit einer exponentiell, quadratisch oder linear fallenden Intensitätsflanke erzeugt wird. Basierend auf der Form der abfallenden Intensitätsflanke der erzeugten Strahlenpulse kann eine gezielte Nachbildung von einer Vielzahl nacheinander emittierten kurzzeitigen Strahlenpulsen erfolgen. Mit zunehmender Länge der abfallenden Intensitätsflanke und dadurch zunehmender Strahlungsleistung kann der Dynamikbereich der LIDAR-Vorrichtung erhöht werden.

Nach einer weiteren Ausführungsform ist die Auswerteelektronik als eine aktive oder passive Lawinenlöschschaltung ausgestaltet. Die Lawinenlöschschaltung ermöglicht ein Aktivieren der SPAD-Zellen zum Detektieren von Photonen durch ein Anlegen einer Spannung kurz vor einer Durchbruchsspannung der SPAD-Zellen. Entsprechend kann durch Absenken der an den SPAD-Zellen angelegten Spannung hinunter auf die Durchschlagsspannung oder darunter eine durch Photonen ausgelöst SPAD-Zelle erneut aktiviert werden.

Durch Empfangen von Photonen kann die Durchschlagsspannung der SPAD-Zellen überwunden und ein Stromanstieg kurzer Dauer gemessen werden. Ein derartiger Stromanstieg kann beispielsweise über eine Zeitdauer von 10 ns messbar sein bzw. andauern. Durch die Ausgestaltung der Auswerteelektronik als eine aktive oder passive Lawinenlöschschaltung kann eine flexible Anpassung der Auswerteelektronik an die Anforderungen der LIDAR-Vorrichtung erfolgen.

Gemäß einem weiteren Ausführungsbeispiel werden die SPAD-Zellen des Detektors mit einer variabel einstellbaren Aktivzeit durch die Auswerteelektronik angesteuert. Durch die DC-kopplung der Auswerteelektronik wird der Lawinenstrom der jeweiligen SPAD-Zellen des Detektors nicht durch die zwangsweise kurze Aktivzeit der Auswerteelektronik unterbrochen, sondern durch die langsam abfallende Flanke der reflektierten und/oder rückgestreuten Strahlen, welche unterhalb einen definierten Wert fallen muss. Es werden somit die SPAD-Zellen für die gesamte Dauer eines empfangenen Strahlenpulses oder zumindest während einer teilweisen Dauer zum Empfangen von Photonen aktiviert. Durch diese Maßnahme können die SPAD-Zellen länger belichtet werden, wodurch der dynamische Bereich des Detektors erhöht wird.

Die DC-Kopplung der Auswerteelektronik der SPAD-Zellen ermöglicht darüber hinaus eine gezielte Steuerung der Aktivzeit und damit der möglichen Sensitivitätsdauer pro emittierten Strahlenpuls. Die Aktivzeit der SPAD-Zellen kann durch ein Einstellen einer Zeitspanne erfolgen, während welcher die SPAD-Zellen mit einer vorgesehenen Betriebsspannung geringfügig unterhalb ihrer Durchbruchsspannung beaufschlagt werden.

Gemäß einem weiteren Aspekt der Erfindung wird eine LIDAR-Vorrichtung zum Abtasten eines Abtastbereichs bereitgestellt. Die LIDAR-Vorrichtung weist mindestens eine Strahlenquelle zum Erzeugen von elektromagnetischen Strahlen, mindestens einen Detektor zum Empfangen von aus dem Abtastbereich rückgestreuten und/oder reflektierten Strahlen und ein mit einer Auswerteelektronik verbundenes Steuergerät auf.

Der Detektor ist als ein SPAD-Array ausgestaltet und mit der Auswerteelektronik zum Betreiben des SPAD-Arrays verbunden, wobei das Steuergerät dazu eingerichtet ist, Ausgaben der Auswerteelektronik auszuwerten und die mindestens eine Strahlenquelle anzusteuern.

Nach einer vorteilhaften Ausführungsform der LIDAR-Vorrichtung, welche nicht in den Schutzbereich des beanspruchten Gegenstands fällt, ist die Auswerteelektronik als eine DC-gekoppelte Auswerteelektronik ausgestaltet.

Durch diese Maßnahme kann im Gegensatz zu einer AC-Kopplung eine Verlängerung der sogenannten Totzeit der SPAD-Zellen durch mehrere nacheinander von den SPAD-Zellen empfangene Photonen verhindert werden.

Des Weiteren kann hierdurch eine komplexe Ansteuerung von mehreren Laserquellen entfallen und die Auswerteelektronik der SPAD-Zellen technisch einfacher ausgestaltet sein.

Gemäß einem weiteren Ausführungsbeispiel, welches ebenfalls nicht in den Schutzbereich des beanspruchten Gegenstands fällt, ist die mindestens eine Strahlenquelle derart durch das Steuergerät ansteuerbar, dass die erzeugten Strahlen als Strahlenpulse mit einer verlängerten fallenden Intensitätsflanke in den Abtastbereich emittierbar sind. Hierdurch kann die Verwendung mehrerer Strahlenquellen oder eine technisch komplexe Ansteuerung einer Strahlenquelle zum Erzeugen mehrerer kurz hintereinander emittierter Strahlenpulse vermieden werden, um eine Erhöhung des Dynamikbereichs zu erzielen.

Im Folgenden werden anhand von stark vereinfachten schematischen Darstellungen bevorzugte Ausführungsbeispiele der Erfindung näher erläutert. Hierbei zeigen
- Fig. 1: eine schematische Darstellung einer LIDAR-Vorrichtung gemäß einer Ausführungsform,
- Fig. 2: ein schematisches Diagramm zum Veranschaulichen eines zeitlichen Spannungsverlaufs einer AC-gekoppelten Auswerteelektronik,
- Fig. 3: ein schematisches Diagramm zum Veranschaulichen eines zeitlichen Spannungsverlaufs einer DC-gekoppelten Auswerteelektronik,
- Fig. 4: ein schematisches Diagramm zum Verdeutlichen eines angepassten Intensitätsverlaufs eines Strahlenpulses und
- Fig. 5: ein Diagramm mit durch den Detektor zeitlich abhängig empfangenen bzw. gezählten Photonen.

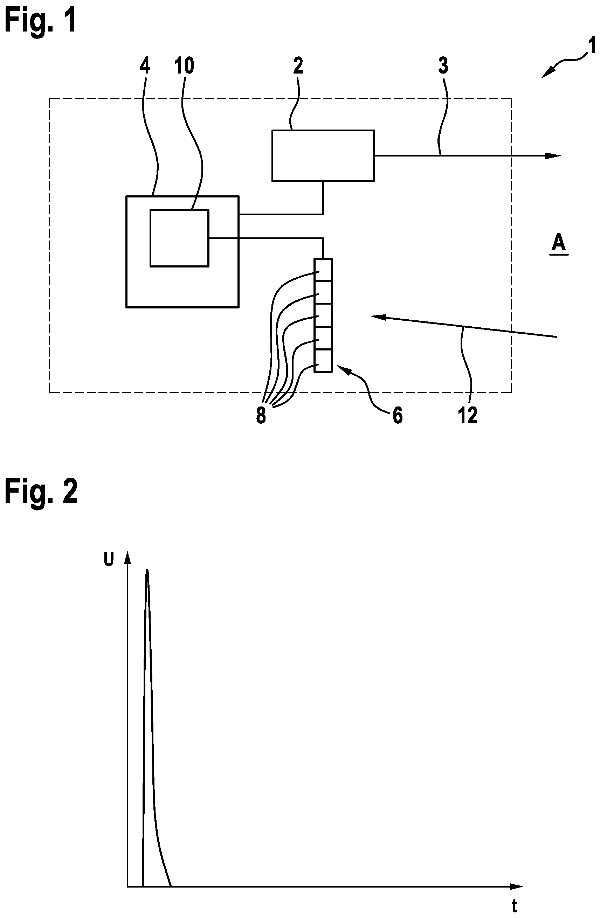

Die Figur 1 zeigt eine schematische Darstellung einer LIDAR-Vorrichtung 1 gemäß einer Ausführungsform. Die LIDAR-Vorrichtung 1 weist eine Strahlenquelle 2 auf, welche zum Erzeugen von Strahlen bzw. Strahlenpulsen 3 dient.

Die Strahlenquelle 2 ist als ein Laser ausgestaltet und kann durch ein Steuergerät 4 elektrisch angesteuert und zum Erzeugen von Strahlen 3 angeregt werden. Die Strahlenquelle 2 kann beispielsweise Strahlen 3 mit einer Wellenlänge im infraroten, sichtbaren oder ultravioletten Wellenlängenbereich erzeugen.

Des Weiteren weist die LIDAR-Vorrichtung 1 einen Detektor 6 auf. Der Detektor 6 weist eine Vielzahl von SPAD-Zellen 8 auf, welche mit einer Auswerteelektronik 10 verbunden sind. Die Auswerteelektronik 10 ist vorzugsweise als DC-gekoppelte Auswerteelektronik 10 ausgestaltet bei der beispielsweise die DC-Anteile der an den SPAD-Zellen 8 angelegten Spannung U nicht durch einen Kondensator herausgefiltert sind. Die SPAD-Zellen 8 des Detektors 6 sind flächig angeordnet und können aus dem Abtastbereich A reflektierte und/oder rückgestreute Strahlen 12 empfangen bzw. detektieren.

Die empfangenen Strahlen 12 und insbesondere Photonen der empfangenen Strahlen 12 werden durch die Auswerteelektronik 10 in Form von kurzzeitigen Stromimpulsen detektiert und in digitale Messdaten umgewandelt. Dieser Schritt kann alternativ oder zusätzlich in Verbindung mit dem Steuergerät 4 erfolgen.

Durch die Verwendung einer DC-gekoppelten Auswerteelektronik 10 wird nicht nur ein sogenannter Count durch ein empfangenes Photon auslöst, wie bei einer AC-gekoppelten Auswerteelektronik, sondern es können durch eine verlängerte Aktivzeit Z beispielsweise sechs oder mehr Counts pro Aktivzeit detektiert werden.

In der Figur 2 ist beispielhaft die an den SPAD-Zellen 8 angelegte Spannung U bei einer beispielhaften AC-gekoppelten Auswerteelektronik dargestellt. Die zum Aktivieren der SPAD-Zellen 8 notwendige Spannung U liegt durch die Schwingung der Spannung U nur kurzzeitig vor.

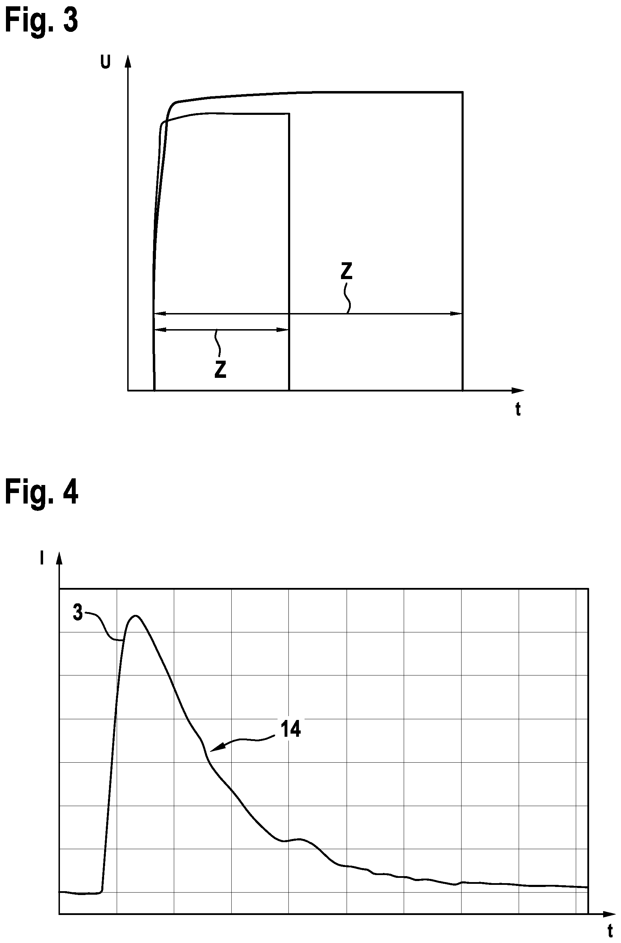

Alternativ hierzu ist in der Figur 3 ein schematisches Diagramm zum Veranschaulichen eines zeitlichen Spannungsverlaufs U der DC-gekoppelten Auswerteelektronik 10 gezeigt.

Es sind in der Figur 3 zwei unterschiedliche Spannungsverläufe U dargestellt, welche an den SPAD-Zellen 8 angelegt werden können, um Photonen der empfangenen Strahlen 12 detektieren zu können. Die Spannungsverläufe U unterscheiden sich insbesondere in der Aktivzeit Z, welche durch die DC-gekoppelte Auswerteelektronik 10 variabel einstellbar ist.

Der Dynamikbereich wird bei der DC-gekoppelten Auswerteelektronik 10 vergrößert, da die Länge des Spannungssignals bzw. die Aktivzeit Z die Information liefert, wie viel Intensität I ein empfangener Strahl 12 aufweist. Dies ist bei der in Figur 2 gezeigten AC-Kopplung nach einer kurzen Zeit nicht mehr möglich.

Die Figur 4 zeigt ein schematisches Diagramm zum Verdeutlichen eines angepassten Intensitätsverlaufs I eines erzeugten Strahlenpulses 3. Im Unterschied zu einem gaußförmigen Strahlenpuls, weist der dargestellte Intensitätsverlauf I des Strahlenpulses 3 eine verlängerte fallende Intensitätsflanke 14 auf. Im dargestellten Ausführungsbeispiel ist die fallende Intensitätsflanke 14 exponentiell abfallend ausgestaltet. Beispielsweise kann die fallende Intensitätsflanke 14 nach einer Zeit t von 30 ns eine verbleibende Intensität I von 1% aufweisen.

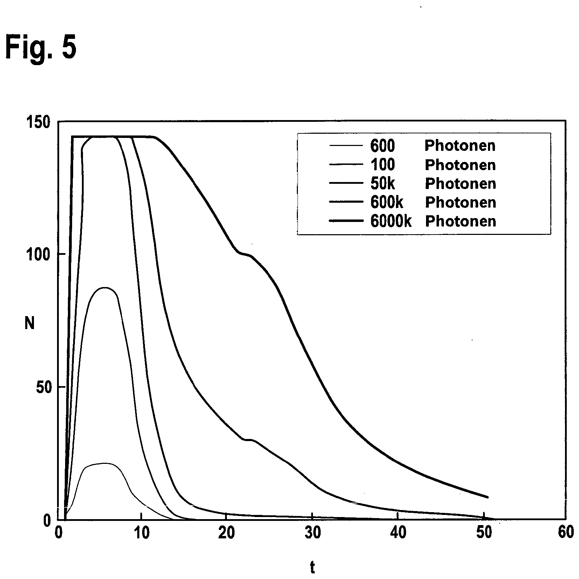

Die Figur 5 zeigt ein Diagramm mit durch den Detektor 6 zeitlich abhängig empfangenen bzw. gezählten Photonen. Es ist insbesondere eine Photonenanzahl N in Abhängigkeit von der Zeit t dargestellt. Hierbei kann mit zunehmender Zeit t, welche zum Detektieren der empfangenen Strahlen 12 verwendet wird eine größere Photonenanzahl N detektiert werden.

Der Dynamikbereich kann als ein Bereich zwischen einer minimal detektierbaren Photonenanzahl N und einer maximal detektierbaren Photonenanzahl N beschrieben werden. Die Vergrößerung des Dynamikbereichs ermöglicht hierbei eine verbesserte Unterscheidbarkeit der detektierbaren Photonenanzahl N. Beispielsweise kann durch einen größeren Dynamikbereich eine geringere detektierbare Photonenanzahl N von einer erhöhten detektierbaren Photonenanzahl N unterschieden werden. Dieser Zusammenhang und die Unterscheidbarkeit sind in der Figur 5 schematisch verdeutlicht.

Die Zahlenangaben sind in der Figur 5 beispielhaft angegeben und dienen lediglich der Verdeutlichung von Unterschieden.

## Patentansprüche

1. Verfahren zum Betreiben einer LIDAR-Vorrichtung (1) durch ein Steuergerät (4), wobei
- mindestens ein Strahlenpuls (3) durch eine Strahlenquelle (2) in einen Abtastbereich (A) emittiert wird,
- aus dem Abtastbereich (A) reflektierte und/oder rückgestreute Strahlen (12) durch einen mehrere Single-Photon-Avalanche-Diode (SPAD)-Zellen (8) aufweisenden Detektor (6) empfangen und in elektrische Zählpulse (N) gewandelt werden,
**dadurch gekennzeichnet, dass** der mindestens eine Strahlenpuls (3) mit einer verlängerten fallenden Intensitätsflanke (14) mittels Ansteuerung der Strahlenquelle (2) durch das Steuergerät (4) erzeugt und der Detektor (6) durch eine DC-gekoppelte Auswerteelektronik (10) ausgelesen wird, wobei eine Länge eines durch den Detektor (6) empfangenen Spannungssignals oder eine Aktivzeit (Z) des Detektors (6) eine Information über eine Intensität (I) der aus dem Abtastbereich (A) reflektierten und/oder rückgestreuten Strahlen (12) liefert.

2. Verfahren nach Anspruch 1, wobei die Strahlenquelle (2) derart durch das Steuergerät (4) betrieben wird, dass der mindestens eine Strahlenpuls (3) mit einer exponentiell, quadratisch oder linear fallenden Intensitätsflanke (14) erzeugt wird.

3. Verfahren nach Anspruch 1 oder 2, wobei die Auswerteelektronik (10) als eine aktive oder passive Lawinenlöschschaltung ausgestaltet ist.

4. Verfahren nach einem der Ansprüche 1 bis 3, wobei die SPAD-Zellen (8) des Detektors (6) mit einer variabel einstellbaren Aktivzeit (Z) durch die Auswerteelektronik (10) angesteuert werden.

5. Steuergerät (4), welches das Verfahren gemäß einem der vorhergehenden Ansprüche ausführt.

6. LIDAR-Vorrichtung (1) zum Abtasten eines Abtastbereichs (A), aufweisend mindestens eine Strahlenquelle (2) zum Erzeugen von elektromagnetischen Strahlen (3), mindestens einen Detektor (6) zum Empfangen von aus dem Abtastbereich (A) rückgestreuten und/oder reflektierten Strahlen (12) und aufweisend ein mit einer Auswerteelektronik (10) verbundenes Steuergerät (4) gemäß Anspruch 5, wobei der Detektor (6) als ein SPAD-Array (8) ausgestaltet und mit der Auswerteelektronik (10) zum Betreiben des SPAD-Arrays (8) verbunden ist, wobei das Steuergerät (4) dazu eingerichtet ist, Ausgaben der Auswerteelektronik (10) auszuwerten und die mindestens eine Strahlenquelle (2) anzusteuern.

## Claims

1. Method for operating a LIDAR device (1) by a controller (4), wherein
- at least one radiation pulse (3) is emitted into a scanning region (A) by a radiation source (2),
- beams (12) that are reflected and/or backscattered from the scanning region (A) are received by a detector (6) that comprises multiple single photon avalanche diode (SPAD) cells (8) and are converted into electrical counting pulses (N),
**characterized in that** the at least one radiation pulse (3) with an extended falling intensity edge (14) is generated by virtue of the radiation source (2) being controlled by the controller (4), and the detector (6) is read out by DC-coupled evaluation electronics (10), with a length of a voltage signal received by the detector (6) or an active time (Z) of the detector (6) providing information about an intensity (I) of the beams (12) that are reflected and/or backscattered from the scanning region (A).

2. Method according to Claim 1, wherein the radiation source (2) is operated by the controller (4) in such a way that the at least one radiation pulse (3) is generated with an exponentially, quadratically or linearly falling intensity edge (14).

3. Method according to Claim 1 or 2, wherein the evaluation electronics (10) is designed as an active or passive avalanche quenching circuit.

4. Method according to any of Claims 1 to 3, wherein the SPAD cells (8) of the detector (6) are controlled with a variably adjustable active time (Z) by the evaluation electronics (10).

5. Controller (4), which carries out the method according to any of the preceding claims.

6. LIDAR device (1) for scanning a scanning region (A), comprising at least one radiation source (2) for generating electromagnetic beams (3), at least one detector (6) for receiving beams (12) that are backscattered and/or reflected from the scanning region (A) and comprising a controller (4) according to Claim 5 that is connected to evaluation electronics (10), with the detector (6) being designed as a SPAD array (8) and being connected to the evaluation electronics (10) for the purpose of operating the SPAD array (8) and with the controller (4) being configured to evaluate outputs of the evaluation electronics (10) and to control the at least one radiation source (2).

## Revendications

1. Procédé pour faire fonctionner un dispositif LIDAR (1) par un appareil de commande (4),
- au moins une impulsion de rayonnement (3) étant émise par une source de rayonnement (2) dans une zone de balayage (A),
- des rayons (12) réfléchis et/ou rétrodiffusés depuis la zone de balayage (A) étant reçus par un détecteur (6) comportant plusieurs cellules SPAD (8) (cellules à diodes à avalanche monophotonique) et étant convertis en impulsions de comptage électriques (N),
**caractérisé en ce que** l'au moins une impulsion de rayonnement (3) avec un flanc d'intensité (14) décroissant étendu est générée par l'appareil de commande (4) au moyen du pilotage de la source de rayonnement (2) et le détecteur (6) est lu par une électronique d'évaluation (10) couplée en courant continu, une longueur d'un signal de tension reçu par le détecteur (6) ou un temps actif (Z) du détecteur (6) fournissant des informations sur une intensité (I) des rayons (12) réfléchis et/ou rétrodiffusés depuis la zone de balayage (A).

2. Procédé selon la revendication 1, la source de rayonnement (2) étant actionnée par l'appareil de commande (4) de telle manière que l'au moins une impulsion de rayonnement (3) est générée avec un flanc d'intensité (14) décroissant exponentiellement, quadratiquement ou linéairement.

3. Procédé selon la revendication 1 ou 2, **caractérisé en ce que** l'électronique d'évaluation (10) est configurée comme un circuit d'extinction par avalanche actif ou passif.

4. Procédé selon l'une des revendications 1 à 3, les cellules SPAD (8) du détecteur (6) étant pilotées par l'électronique d'évaluation (10) avec un temps actif (Z) à réglage variable.

5. Appareil de commande (4), qui exécute le procédé selon l'une des revendications précédentes.

6. Dispositif LIDAR (1) pour balayer une zone de balayage (A), comportant au moins une source de rayonnement (2) pour générer des rayons électromagnétiques (3), au moins un détecteur (6) pour recevoir des rayons (12) rétrodiffusés et/ou réfléchis depuis la zone de balayage (A), et comportant un appareil de commande (4) selon la revendication 5 relié à une électronique d'évaluation (10), le détecteur (6) étant configuré comme un réseau SPAD (8) et étant relié à l'électronique d'évaluation (10) pour faire fonctionner le réseau SPAD (8), l'appareil de commande (4) étant mis au point pour évaluer des sorties de l'électronique d'évaluation (10) et pour piloter l'au moins une source de rayonnement (2).
